# EUROPÄISCHE PATENTANMELDUNG

(11) **EP 1 222 853 A2**
(43) Veröffentlichungstag der Anmeldung: **17.07.2002**
(21) Anmeldenummer: 01130345.0
(22) Anmeldetag: 19.12.2001
(51) Int. Cl.: A01J 7/02, A01J 5/08

(54) **Verfahren und Vorrichtung zum Melken**

(30) Priorität: 10.01.2001 DE 10100840
(71) Anmelder: Westfalia Landtechnik GmbH, 59302 Oelde (DE)
(72) Erfinder: Bücker, Heinz, 33449 Langenberg-Benteler (DE)
(74) Vertreter: Grünecker, Kinkeldey, Stockmair & Schwanhäusser Anwaltssozietät

(57) **Zusammenfassung**

Die vorliegende Erfindung betrifft ein Verfahren zum Melken, bei dem zumindest ein Melkbecher an eine Zitze des zu melkenden Tieres angeschlossen und ermolkene Milch von dem Milchbecher abgeführt wird und bei dem bei Versiegen des Flusses ermolkener Milch ein Reinigungsmedium über eine Zufuhrleitung in den Melkbecher geleitet wird. Die vorliegende Erfindung betrifft weiterhin eine zur Durchführung des Verfahrens geeignete Vorrichtung mit mindestens einem Melkbecher, der mit einer ermolkene Milch führenden Milchleitung kommuniziert und in dessen Innenraum eine Zufuhrleitung mündet, über welche von einer Quelle abgegebenes Reinigungsmedium in den Melkbecher einbringbar ist. Mit der vorliegenden Erfindung wird ein Verfahren und eine Vorrichtung angegeben, mit welchen mit höherer Sicherheit das Eindringen von Schmutz und Keimen in die ermolkene Milch verhindert werden kann. Erfindungsgemäß wird das Reinigungsmedium wie auch zur Abfuhr der ermolkenen Milch eingeführte Luft über die Zufuhrleitung in den Melkbecher eingeleitet.

## Beschreibung

Die vorliegende Erfindung betrifft ein Verfahren zum Melken, bei dem zumindest ein Melkbecher an eine Zitze des zu melkenden Tieres angeschlossen und ermolkene Milch von dem Milchbecher abgeführt wird und bei dem bei Versiegen des Flusses ermolkener Milch ein Reinigungsmedium über eine Zufuhrleitung in den Melkbecher geleitet wird. Die vorliegende Erfindung betrifft weiterhin eine zur Durchführung des Verfahrens geeignete Vorrichtung mit mindestens einem Melkbecher, der mit einer ermolkene Milch führenden Milchleitung kommuniziert und in dessen Innenraum eine Zufuhrleitung mündet, über welche von einer Quelle abgegebenes Reinigungsmedium in den Melkbecher einbringbar ist.

Ein derartiges Verfahren ist beispielsweise aus EP-A-0543463 bekannt. Bei diesem Stand der Technik ist die Zufuhrleitung für Reinigungsmedium mit einer Sammeleinrichtung verbunden, an welcher verschiedene Leitungen angeschlossen sind. Eine dieser Leitungen führt ein Desinfektionsmittel. Eine andere der Leitungen führt eine Spülflüssigkeit. Schließlich ist eine weitere Leitung mit einer Luftdruckquelle verbunden. Sämtliche der vorgenannten Medien, d.h. Desinfektionsflüssigkeit, Spülwasser und Luft zum Ausblasen und Trocknen werden als Reinigungsmedien im Sinne der vorliegenden Erfindung angesehen und erlauben beim Stand der Technik ein mehrphasiges Reinigen, bei dem der von der Zitze abgelöste, nach unten hängende Melkbecher zunächst mit Desinfektionsflüssigkeit besprüht wird, nachfolgend mit dem Wasser gespült und schließlich durch Ausblasen des Innenraumes des Melkbechers zumindest überwiegend getrocknet wird.

Die aus dem vorgenannten Stand der Technik bekannte Vorrichtung weist eine unmittelbar unterhalb des Melkbechers in der Milchleitung angeordnete Verschlußdüse auf, an welcher das Reinigungsmedium anliegt und bei Druckbeaufschlagung des Reinigungsmediums durch die Verschlußdüse in den Innenraum des Melkbechers abgegeben wird.

Bei einem weiteren Stand der Technik, der aus der WO99/66787 bekannt ist, wird das Reinigungsmedium bei Versiegen des Flusses ermolkener Milch, jedoch vor dem Ablösen des Melkbechers von der Zitze in den Innenraum des Zitzenbechers eingebracht. Das Problem einer Durchmischung der durch die Milchleitung abgezogenen ermolkenen Milch und mit der auf die Zitze gesprühten Desinfektionsflüssigkeit soll bei diesem Stand der Technik durch ein Ventil vermieden werden, dessen Ventilkörper die Zufuhrleitung für das Reinigungsmedium freigibt und dabei gleichzeitig den in Strömungsrichtung der ermolkenen Milch unterhalb liegenden Teil des Zitzenbechers dicht abschließt. Auch bei diesem Stand der Technik wird das Reinigungsmedium, d.h. zunächst Desinfektionsmittel, gegebenenfalls vernebelt mit Druckluft und später gegebenenfalls auch Reinigungsflüssigkeit von einer zentralen Versorgungsleitung über die Zufuhrleitung zu dem Inneren des Zitzenbechers geleitet.

Bei dem letztgenannten Stand der Technik ist insbesondere das Abdichten der Leitung in Strömungsrichtung der ermolkenen Milch problematisch. Bereits kleinste Störungen an der Wandung des Zitzenbechers verhindern einen sicheren Abschluß und damit das aus lebensmittelrechtlicher Sicht zwingend gebotene Trennen von Renigungsmedium in Form von Desinfektionsflüssigkeit und Wasser einerseits und der beim Melken gewonnenen Milch andererseits.

Beim Melken wird üblicherweise eine Druckdifferenz zwischen dem Euter und der in dem Melkbecher aufgenommenen Zitzenspitze erzeugt. Über diesen Unterdruck wird auch die ermolkene Milch von dem Melkbecher über die Milchleitung in die nachgeordneten Leitungen und Sammelbehälter abgezogen. Zum besseren Abführen der ermolkenen Milch über die Melkbecher und die Milchleitung in eine zentrale Melkleitung finden oftmals Melkzeuge, die beispielsweise bei Kühen aus einer Einheit von vier zusammengefaßten Melkbechern bestehen, Anwendung, die in der Nähe des Melkbechers mit Öffnungen zum Einlassen von Luft ausgestattet sind, und zwar insbesondere dann, wenn es sich um Melkzeuge mit langen Leitungen zum Abführen der ermolkenen Milch ohne Verwendung separater Milchsammelstücke handelt. Bei derartigen Melkzeugen wird die ermolkene Milch direkt von den Melkbechern in die entfernt liegende, zentrale Melkleitung geleitet. Die über die Öffnungen beim Melken eingebrachte Luft führt zu einer Verminderung desjenigen Unterdruckes, der einen Austritt der Milch aus der Zitze in den Melkbecher bewirkt.

Die Einlassöffnungen für die druckmindernde Luft stellen gleichzeitig Eintrittsmöglichkeiten für Keime und Verschmutzungen dar. Die Lufteinlassöffnungen müssen daher gereinigt werden, nicht zuletzt da sich auch abgezogene Milch an den Einlassöffnungen festsetzen kann.

Der vorliegenden Erfindung liegt das technische Problem zugrunde, ein Verfahren der eingangs genannten Art dahingehend weiterzubilden, dass ermolkene Milch mit höherer Sicherheit gegen das Eindringen von Schmutz und Keimen geschützt wird. Darüber hinaus soll mit der vorliegenden Erfindung eine zur Durchführung des Verfahrens geeignete Vorrichtung angegeben werden, mit der auf einfache und wirkungsvolle Weise das Eindringen und Festsetzen von Schmutz in der Melkvorrichtung verhindert wird.

Hinsichtlich des verfahrensmäßigen Problems wird mit der vorliegenden Erfindung vorgeschlagen, das eingangs genannte Verfahren dahingehend weiterzubilden, dass beim Abführen der ermolkenen Milch Luft über die Zufuhrleitung in den Melkbecher eingeleitet wird. Das erfindungsgemäße Verfahren umfasst daher in vorbekannter Weise einen zyklischen Wechsel zwischen dem Melken, d.h. dem Abführen von ermolkener Milch über eine Milchleitung einerseits und dem Reinigen des Melkbechers gegebenenfalls bei vorheriger Desinfektion der in dem Melkbecher aufgenommenen Zitze. Im Gegensatz zum vorbekannten Stand der Technik wird jedoch bei dem erfindungsgemäßen Verfahren sowohl das Reinigungsmedium als auch die Luft zur Verminderung des Druckes im Innern des Melkbechers über eine einzige Zufuhrleitung zugeführt. Beim Einziehen von druckmindernder Luft während der Milchgewinnung in Richtung auf den Melkbecher eingezogene Keime und/oder Verschmutzung werden damit in dem nachfolgenden Reinigungsschritt zwangsläufig ausgespült und gegebenenfalls durch Desinfektionsflüssigkeit abgetötet. Die zur Druckminderung eingezogene Luft wird bei dem erfindungsgemäßen Verfahren über die Zufuhrleitung eingebracht, welche ein von dem Melkbecher entfernt liegendes Ende aufweisen kann und welches nicht unmittelbar benachbart zu dem unterhalb des Euters des zu melkenden Tieres befindlichen, stark verschmutzten Bereiches liegt.

Zur Lösung des vorrichtungsmäßigen Problems wird mit der vorliegenden Erfindung die eingangs genannte Vorrichtung durch ein Ventil weitergebildet, an welches eine mit der Quelle kommunizierende Reinigungsleitung, eine mit Luft gespeiste Druckminderungsleitung sowie die Zufuhrleitung anzuschließen ist und über welches die Zufuhrleitung wahlweise mit der Reinigungsleitung oder der Druckminderungsleitung verbindbar ist. Bei der erfindungsgemäßen Vorrichtung liegt zwischen dem Einlass für Luft und dem Melkbecher die Zufuhrleitung, welche wahlweise entweder mit der Quelle für Reinigungsmedium oder aber der Quelle für druckmindernde Luft verbindbar ist. Über die Druckminderungsleitung eingebrachte Verunreinigung, welche in die Zufuhrleitung gelangt, wird damit zwangsläufig beim Reinigen des Melkbechers gereinigt. Dabei werden nicht nur Bakterien und Verschmutzung, die eventuell einen Filter passiert haben, abgetötet bzw. ausgewaschen, sondern es wird auch die Auslassöffnung der Druckminderungsleitung an dem Melkbecher gereinigt und gespült. Das Anhaften von Milchresten an dieser Stelle wird damit sicher vermieden.

Gemäß einer bevorzugten Ausgestaltung weist das Ventil der erfindungsgemäßen Vorrichtung einen Ventilkörper auf, der von einer ersten Stellung, in der die Zufuhrleitung mit der Reinigungsleitung kommuniziert, in eine zweite Stellung, in der die Zufuhrleitung mit der Druckminderungsleitung kommuniziert, bringbar ist. Durch diese Ausgestaltung wird ein verhältnismäßig einfach zu reinigendes Ventil geschaffen, so dass auch diejenigen Teile der erfindungsgemäßen Vorrichtung, die nicht bei jeder Reinigungsphase durch Einleiten des Reinigungsmediums gespült und gegebenenfalls desinfiziert werden, auf einfache Weise einer Reinigung und/oder Desinfektion gegebenenfalls nach Zerlegen des Ventiles unterzogen werden können.

Vorzugsweise weist der in einem Gehäuse aufgenommene Ventilkörper Auslasskanäle auf, welche den Ventilkörper umfänglich umgeben. Der Ventilkörper weist ferner wenigstens einen Ventilkanal auf, der in einer von der ersten und zweiten Stellung unterschiedlichen Zwischenstellung mit den Auslasskanälen kommuniziert. Die Auslasskanäle kommunizieren bei dieser bevorzugten Ausgestaltung mit der Umgebung und leiten so bei einer eventuellen Lekage in dem Ventil die Fluide an die Umgebung ab. Es wird somit verhindert, dass Reinigungsmedium, insbesondere Wasser und Desinfektionsmittel beim Abziehen der ermolkenen Milch in den Melkbecher und somit in die Milchleitung und die nachgeordneten Leitungen gelangt.

In der Zwischenstellung ist es darüber hinaus möglich, durch die in dem Ventilgehäuse ausgebildeten Auslasskanäle Reinigungs- bzw. Desinfektionsflüssigkeit in das Ventil einzuleiten, was bei einer entsprechenden Auslegung der Auslasskanäle eine Demontage zur vollständigen Reinigung und Desinfektion des Ventiles überflüssig machen kann.

Diese Ausbildung ist besonders vorteilhaft, wenn der Ventilkörper gemäß einer weiteren bevorzugten Ausgestaltung der vorliegenden Erfindung einen Reinigungs-Durchlasskanal aufweist, der in der ersten Stellung wirksam ist, und einen Druckminderungs-Durchlasskanal, der in der zweiten Stellung wirksam ist. So kann beispielsweise in der Zwischenstellung auch der Druckminderungs-Durchlasskanal mit Reinigungs- und Desinfektionsflüssigkeit über die Auslasskanäle gespült und desinfiziert werden.

Die Ausbildung eines Reinigungs- und eines Druckminderungs-Durchlasskanals in den Ventilkörper bietet darüber hinaus die Möglichkeit, die jeweiligen Strömungskanäle für das Reinigungsmedium einerseits und für die druckmindernde Luft andererseits in dem Ventil anzupassen. Zu dem Ventil hin- und von dem Ventil abführende Leitungen können daher herkömmlich ausgestaltet sein. Das Volumen der beim Ermelken zur Druckminderung eingelassenen Luft wird vorzugsweise durch einen Druckminderungs-Durchlasskanal geregelt, der als Drossel ausgebildet ist.

Eine Verunreinigung der erfindungsgemäßen Vorrichtung durch in die Vorrichtung eingezogene Luft wird dadurch wirkungsvoll verhindert, dass in der Druckminderungsleitung ein Luftfilter vorgesehen ist. Zur besseren Abfuhr der ermolkenen Milch ist es darüber hinaus zu bevorzugen, die Druckminderungsleitung mit einer Druckquelle zu verbinden, wobei es besonders zu bevorzugen ist, an der Druckminderungsleitung ein periodisch gesteuertes Lufteinlassventil vorzusehen, so dass atmosphärische Luft oder Luft mit Überdruck gepulst in den Melkbecher eingebracht werden kann, wodurch einerseits ein wirkungsvolles Abführen der ermolkenen Milch und andererseits der Aufbau eines hinreichenden Unterdruckes zum Abziehen der Milch aus dem Euter gefördert wird.

Insbesondere beim Einleiten der Reinigungsphase bei einer in dem Melkbecher aufgenommenen Zitze ist es zu bevorzugen, ein die Milchleitung absperrendes Sperrventil vorzusehen. Dieses Sperrventil ist gemäß einer bevorzugten Weiterbildung der vorliegenden Erfindung bei einem Melkzeug mit mehreren Melkbechern den Milchleitungen sämtlicher Melkbecher zugeordnet. Das Melkzeug wird bei dieser bevorzugten Ausgestaltung an zentraler Stelle gegenüber einem stromabwärts mit Bezug auf die ermolkene Milch liegenden Milchsammelbehältnis abgesperrt.

Weitere Einzelheiten, Vorteile und Merkmale der vorliegenden Erfindung ergeben sich aus der nachfolgenden Beschreibung eines Ausführungsbeispiels in Verbindung mit der Zeichnung. In dieser zeigen:
- Fig. 1: Eine Längsschnittansicht durch ein Ausführungsbeispiel der erfindungsgemäßen Vorrichtung und
- Fig. 2: das in Fig. 1 enthaltene Ventil in einer zweiten Stellung.

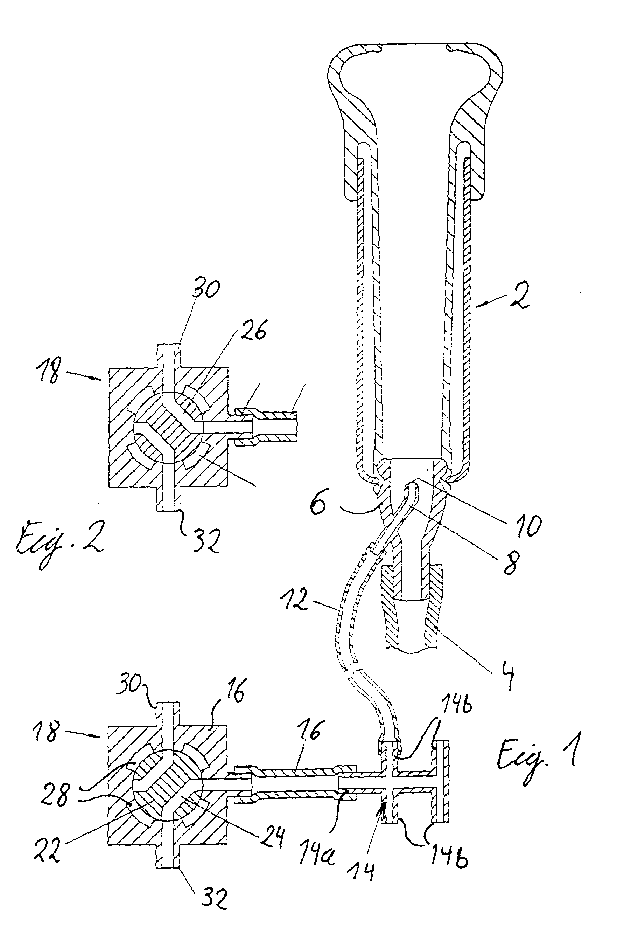

In Fig. 1 ist ein Melkbecher 2 gezeigt, dessen unteres Ende mit einer Milchleitung 4 kommuniziert. An diese Milchleitung 4 sind die zur Abfuhr der ermolkenen Milch nachgeordneten Leitungen sowie eventuelle Sammelbehälter angeschlossen.

Zwischen der Milchleitung 4 und dem Melkbecher 2 befindet sich ein Anschlussstück 6, welches seitlich von einem Einlasskanal 8 durchragt ist. Die Austrittsöffnung 10 des Einlasskanals 8 erzeugt einen auf das obere, offene Ende des Melkbechers 2 gerichteten Strahl.

Der Einlasskanal 8 ist mit einer Zufuhrleitung 12 verbunden, die wiederum an einen Verteiler 14 angeschlossen ist. Der Verteiler 14 hat einen Einlassstutzen 14a sowie vier Auslassstutzen 14b zum Anschluss von drei weiteren, hier nicht dargestellten Zufuhrleitungen von insgesamt vier zu einem Melkzeug für Kühe zusammengefassten Melkbechern.

Der Verteiler 14 ist über eine Verbindungsleitung 16 mit einem Ventil 18 verbunden. Das Ventil 18 weist einen in einem Ventilgehäuse 20 verschwenkbar gelagerten Ventilkörper 22 auf. Der Ventilkörper 22 hat einen Reinigungs-Durchlasskanal 24 sowie einen davon separaten Druckminderungs-Durchlasskanal 26. In dem Ventilgehäuse 20 sind mit Bezug auf den Umfang des Ventilkörpers 22 mehrere Auslassöffnungen 28 verteilt vorgesehen. Die Auslassöffnungen 28 kommunizieren mit der Umgebung.

Das Ventilgehäuse 20 weist außer dem einen Anschlussstutzen 30 für eine nicht dargestellte Druckminderungsleitung sowie weiterhin einen Anschlussstutzen 32 für eine gleichfalls nicht dargestellte Reinigungsleitung auf.

In der in Fig. 1 gezeigten ersten Stellung des Ventils 18 kommuniziert die an den Anschlussstutzen 32 angeschlossene Reinigungsleitung über den Verteiler 14 mit dem Einlasskanal 8. Das andere Ende der Reinigungsleitung kann an eine zentrale Sammeleinrichtung angeschlossen sein, wie sie beispielsweise aus der EP-A-0543463 vorbekannt ist und an welche separate Leitungen für unterschiedliche Reinigungsmedien, wie beispielsweise Desinfektionsmittel, Wasser und/der Druckluft zur Trocknung im Anschluss an das Spülen angeschlossen sein können. Über die Reinigungsleitung können danach abhängig von der Sammeleinrichtung entweder hintereinander oder gleichzeitig unterschiedliche Reinigungsmedien in das Innere der vier Melkbecher 2 eingeleitet werden. So kann beispielsweise zunächst die in dem Melkbecher hängende Zitze desinfiziert und unmittelbar im Anschluss das von der Zitze abgenommene Melkzeug durch Einbringen von Desinfektionsflüssigkeit, Wasser und Druckluft desinfiziert, gespült und schließlich überwiegend getrocknet werden. Dieser Reinigungsschritt, der beim Versiegen des Milchstromes ermolkener Milch durchgeführt wird, wird jeweils durchgeführt, bevor das Melkzeug an das Euter einer weiteren Kuh angeschlossen wird.

Beim Anschließen des Melkzeuges an eine Kuh oder unmittelbar danach wird der Ventilkörper 22 von der in Fig. 1 dargestellten ersten Stellung in die in Fig. 2 dargestellte zweite Stellung gebracht. Hierdurch kann beim Ermelken der Milch derjenige Unterdruck, der über die Milchleitung 4 im Inneren des Melkbechers 2 erzeugt wird, verringert werden. Die über die Druckminderungsleitung eingebrachte Luft führt zur Erhöhung der Strömungsgeschwindigkeit in der Milchleitung 4 und den nachgeordneten Leitungen. Hierdurch wird der Milchfluss ermolkener Milch verbessert. Die Steuerung und Regulierung der über die Druckminderungsleitung zugeführten Luft sowie das Druckgefälle der zugeführten Luft kann über eine separate, an dem anderen Ende der Druckminderungsleitung angeschlossene Einrichtung gesteuert werden. So kann beispielsweise der Storm zugeführter Luft periodisch gepulst sein. Neben einem atmosphärischen Druck kann auch ein Überdruck in das Innere des Melkbechers beim Melken eingespeist werden.

Bei Versiegen des Milchstromes erfolgt erneut eine Umstellung des Ventiles in die erste Stellung. Hierbei kann die Zitze der Kuh noch in dem Melkbecher aufgenommen sein, um diese zunächst zu desinfizieren, wie dies vorstehend bereits beschrieben worden ist. Die Reinigung des Melkbechers 2 erfolgt in jedem Fall über die Zufuhrleitung 12, d.h. über diejenige Leitung, über welche auch die Luft zur Druckminderung in dem Melkbecher eingeleitet worden ist. Diese Zufuhrleitung für druckmindernde Luft wird somit nach jedem einzelnen Melken einer Kuh gereinigt, und zwar ohne dass gesonderte Reinigungseinrichtungen für die Druckminderungsleitung erforderlich sind. Vielmehr sind die Strömungswege für die druckmindernd eingespeiste Luft und das Reinigungsmedium zwischen dem Ventil 18 und dem Auslasskanal 8 zu jedem Melkbecher 2 identisch.

Die an dem Ventilkörper 22 vorgesehenen Auslassöffnungen 28 verhindern zum einen das Eindringen inbesondere von Reinigungsmedium in den Melkbecher beim Melken, die bei einer eventuellen Lekage zwischen dem Ventilkörper 22 und dem Ventilgehäuse 20 über die Auslassöffnungen 28 abgeführt werden. Darüber hinaus können die Auslassöffnungen 28 auch an Leitungen für Reinigungsmedium angeschlossen werden, beispielsweise zum Abschluss eines jeden Melkganges, d.h. nachdem sämtliche Kühe einer Herde gemolken worden sind und das Melkzeug insgesamt einer gründlichen Reinigung unterzogen wird. Sofern der Ventilkörper 22 in eine Zwischenstellung gedreht worden ist, in der die Durchlasskanäle 24, 26 mit den Auslassöffnungen 28 kommunizieren, können diese Kanäle gründlich durch Spülen der Auslassöffnungen 28 gereinigt werden.

### Bezugszeichenliste

- 2: Melkbecher
- 4: Milchleitungen
- 6: Anschlussstück
- 8: Einlasskanal
- 10: Austrittsöffnung
- 12: Zufuhrleitung
- 14: Verteiler
- 14a: Einlassstutzen
- 14b: Auslassstutzen
- 16: Verbindungsleitung
- 18: Ventil
- 20: Ventilgehäuse
- 22: Ventilkörper
- 24: Reinigungs-Durchlasskanal
- 26: Druckminderungs-Durchlasskanal
- 28: Auslassöffnungen
- 30: Anschlussstutzen für Druckminderungsleitung
- 32: Anschlussstutzen für Reinigungsleitung

## Patentansprüche

1. Verfahren zum Melken, bei dem zumindest ein Melkbecher an eine Zitze des zu melkenden Tieres angeschlossen und ermolkene Milch von dem Melkbecher abgeführt wird und bei dem bei Versiegen des Flusses ermolkener Milch ein Reinigungsmedium über eine Zufuhrleitung in den Melkbecher geleitet wird,
**dadurch gekennzeichnet,**
**dass** bei Abführen der ermolkenen Milch Luft über die Zufuhrleitung in den Melkbecher eingeleitet wird.

2. Vorrichtung zum Melken mit mindestens einem Melkbecher (2), der mit einer ermolkenen Milch abführenden Milchleitung (4) kommuniziert und in dessen Innenraum eine Zufuhrleitung (12) mündet, über welche von einer Quelle abgegebenes Reinigungsmedium in den Melkbecher (2) einbringbar ist,
**gekennzeichnet durch**
ein Ventil (18), an welches eine mit der Quelle kommunizierende Reinigungsleitung, eine mit Luft gespeiste Druckminderungsleitung und die Zufuhrleitung anzuschließen ist und über welches die Zufuhrleitung wahlweise mit der Reinigungsleitung oder der Druckminderungsleitung verbindbar ist.

3. Vorrichtung nach Anspruch 2, **dadurch gekennzeichnet, dass** das Ventil (18) einen Ventilkörper (22) aufweist der von einer ersten Stellung, in der die Zufuhrleitung mit der Reinigungsleitung kommuniziert, in eine zweite Stellung, in der die Zufuhrleitung mit der Druckminderungsleitung kommuniziert, bringbar ist.

4. Vorrichtung nach Anspruch 1 oder 2, **dadurch gekennzeichnet, dass** den Ventilkörper umfänglich umgebene Auslassöffnungen (28) vorgesehen sind, die mit der Umgebung kommunizieren, und dass der Ventilkörper (22) wenigstens einen Ventilkanal (24, 26) aufweist, der in einer von der ersten und zweiten Stellung unterschiedlichen Zwischenstellung mit den Auslassöffnungen (28) kommuniziert.

5. Vorrichtung nach einem der Ansprüche 2-4, **dadurch gekennzeichnet, dass** der Ventilkörper einen Reinigungs-Durchlasskanal (24) aufweist, der in der ersten Stellung wirksam ist, und einen Druckminderungs-Durchlasskanal (26), der in der zweiten Stellung wirksam ist.

6. Vorrichtung nach einem der Ansprüche 2-5, **dadurch gekennzeichnet, dass** der Druckminderungs-Durchlasskanal (26) als Drossel ausgebildet ist.

7. Vorrichtung nach einem der Ansprüche 2-6, **dadurch gekennzeichnet, dass** die Druckminderungsleitung einen Luftfilter aufweist.

8. Vorrichtung nach einem der Ansprüche 2-7, **dadurch gekennzeichnet, dass** die Druckminderungsleitung mit einer Druckluftquelle verbunden ist.

9. Vorrichtung nach einem der Ansprüche 2-8, **dadurch gekennzeichnet, dass** die Druckminderungsleitung an ein periodisch gesteuertes Lufteinlassventil angeschlossen ist.

10. Vorrichtung nach einem der Ansprüche 2-9, **dadurch gekennzeichnet, dass** mehrere Melkbecher (2) zu einem Melkzeug zusammengefasst sind dass den Milchleitungen (4) sämtlicher Melkbecher (2) des Melkzeuges ein zentrales, die Milchleitungen (4) gegenüber einem Sammelbehältnis absperrendes Sperrventil zugeordnet ist.
